## Europäisches Patentamt

## European Patent Office

## Office européen des brevets

(11) Publication number: **0 134 909**
**B1**

(12) **EUROPEAN PATENT SPECIFICATION**

(45) Date of publication of patent specification: **29.06.88**

(51) Int. Cl.⁴: **C 08 F 297/04**

(21) Application number: **84106266.4**

(22) Date of filing: **17.12.81**

(60) Publication number of the earlier application in accordance with Art. 76 EPC: **0 054 440**

(54) Styrene-butadiene block copolymer.

(30) Priority: **17.12.80 JP 178226/80**
**26.12.80 JP 186194/80**
**26.12.80 JP 186195/80**
**03.06.81 JP 85481/81**

(43) Date of publication of application:
**27.03.85 Bulletin 85/13**

(45) Publication of the grant of the patent:
**29.06.88 Bulletin 88/26**

(84) Designated Contracting States:
**FR NL**

(56) References cited:
**AU-B- 429 728**

**CHEMICAL ABSTRACTS, vol. 87, no. 22, 28th November 1977, page 46, no. 169030s, Columbus, Ohio, USA;**

(73) Proprietor: **JAPAN SYNTHETIC RUBBER CO., LTD.**
**11-24, Tsukiji-2-chome Chuo-ku Tokyo 104 (JP)**

(72) Inventor: **Takeuchi, Yasumasa**
**22-32, Shiratoridai Midori-ku Yokohama (JP)**
Inventor: **Sakakibara, Mitsuhiko**
**260-595, Heizushinmachi Yokkaichi-shi (JP)**
Inventor: **Tsutsumi, Fumio**
**1, Morigayamacho Yokkaichi-shi (JP)**
Inventor: **Takashima, Akio**
**1, Morigayamacho Yokkaichi-shi (JP)**
Inventor: **Hattori, Iwakazu**
**1, Morigayamacho Yokkaichi-shi (JP)**

(74) Representative: **Tubby, David George et al MARKS & CLERK 57-60 Lincoln's Inn Fields London WC2A 3LS (GB)**

EP 0 134 909 B1

Courier Press, Leamington Spa, England.

**Description**

This invention relates to a styrene-butadiene block copolymer comprising at least two styrene-butadiene copolymer blocks (or one such copolymer block and one butadiene homopolymer block) differing from each other in their styrene content and in their vinyl content in the butadiene portion, and optionally comprising at least one polybutadiene block.

Recently, owing to an increasing desire for low fuel consumption and good running safety of automobiles, there has developed an increasing desire for a rubber material having low rolling resistance and high wet skid resistance when used as the rubber for tyre treads of automobiles. However, these two characteristics are antagonistic to each other, and, in addition, it is very difficult to achieve these characteristics and satisfactory wear characteristics at the same time by the use of a single rubber material. Therefore, in order to harmonize these characteristics, use has been made of blends of dissimilar rubber materials. For instance, a blend of styrene-butadiene copolymer rubber containing 10 to 30% by weight of bound styrene and not more than 20% of vinyl configuration (which has a relatively high wet-skid resistance) with a polybutadiene rubber containing not more than 20% of vinyl configuration (which has a low rolling resistance and high wear resistance) has been used as the rubber for tyre treads of automobiles. This blend, however, is unsatisfactory in other characteristics, particularly in its wet skid resistance.

More recently, attempts have been made to improve such wet skid resistance and rolling resistance by modifying butadiene rubber (BR) or styrene-butadiene rubber (SBR) which is obtained by using a polymerization initiator consisting mainly of an organolithium compound. For instance, a rubber composition containing BR rich in vinyl configuration has recently been proposed as a commercial product that can achieve the desired object (GB—A 1,166,832). BR rich in vinyl configuration is indeed able to give a good balance between wet skid resistance and rolling resistance, but it has excessively poor fracture and wear characteristics, so that such a BR can not really be used alone. In order to improve such fracture and wear characteristics, blends with other diene rubbers such as natural rubber (NR), high-cis BR and emulsion-polymerized SBR have been proposed. Blends with NR or high-cis BR, however, have an inferior balance between the wet skid resistance and the fracture and wear characteristics, while blends with SBR have inferior rolling resistance.

In JP—A 62248/79, there is proposed a way of improving both wet skid resistance and rolling resistance by using a random SBR having a bound styrene content of 20 to 40% by weight and a relatively high vinyl content in the butadiene portion. Such a random SBR certainly has an improved balance of wet skid resistance, rolling resistance and wear resistance as compared with a conventional emulsion-polymerized SBR or an SBR obtained by using an organolithium polymerization initiator. However, when it is used alone it is still unsatisfactory in its balance between wet skid resistance and rolling resistance or in its fracture characteristics. Therefore, it must rely on blends with other diene rubbers. However, when blended with other diene rubbers, for example with high-cis BR, its rolling resistance is improved but its wet skid resistance and fracture characteristics are inferior, and a blend with NR has inferior wet skid resistance. A blend with emulsion-polymerized SBR has inferior rolling resistance. Thus, in these blends, the individual features of the respective blend constituents are not fully utilized.

On the other hand, JP—B 37415/74 proposes an A—B type block BR comprising blocks differing in their vinyl contents and an A—B type block SBR comprising blocks differing in their bound styrene contents and in the vinyl contents of their butadiene portions, in order to improve wet skid resistance. However, although this block BR is comparatively well balanced in wet skid resistance and rolling resistance, it has remarkably poor fracture characteristics and is difficult to use alone. This block SBR is relatively well balanced in its wet skid resistance, rolling resistance, wear resistance and processability, as compared with conventional SBR obtained with organolithium initiators, but such an improvement is still unsatisfactory in view of the high performance required by the tyre industry. Thus, the use of said block SBR alone for commercial purposes is difficult.

Chem. Abstr. *87* (22) 1977, No. 169030s discloses a styrene-butadiene two-block copolymer having a total bound styrene content of from 35 to 90% and in which the difference between the styrene contents of the two blocks is at least 50%.

We have now discovered that it is possible to produce a styrene-butadiene block copolymer having excellent wet skid resistance and rolling resistance, a good balance of fracture and wear characteristics and satisfactory processability and cold flow properties (e.g. by using an organolithium polymerization initiator), provided that the total bound styrene content is relatively low (from 10 to 40% by weight), the total vinyl content of the butadiene portion is from 30 to 70%, the polymer blocks differ from one another in the average vinyl content of their butadiene portions and in their styrene contents and that certain other criteria are observed.

Thus, the present invention consists in a styrene-butadiene block copolymer having a Mooney viscosity ($ML_{1+4}$, 100°C) of from 10 to 150, a total vinyl content in the whole of the bound butadiene of from 30 to 70% and a total bound styrene content of from 10 to 40% by weight, said block copolymer comprising a combination of (A) at least one styrene-butadiene random copolymer block having a bound styrene content of from 20 to 50% by weight and a vinyl content of from 40 to 75% in the butadiene portion, and (B) at least one polymer block having a bound styrene content of from 0 to 10% by weight and a vinyl content of more than 20% but not more than 50% in the butadiene portion, block (A) comprising from 10 to 90% by weight of the copolymer.

The styrene-butadiene block copolymers of this invention are characterized by excellent wet skid resistance, rolling resistance, fracture resistance and wear resistance and improved processability as compared with conventional SBR.

The excellent physical properties of the styrene-butadiene block copolymers of this invention result from the specific phenomenon that the two or more blocks having the different characteristics and different solubility parameters are surprisingly rendered compatible through vulcanization.

The block copolymers according to this invention, when in the raw rubber state, show different glass transition points corresponding to the respective blocks, but, when vulcanized, they show a single glass transition point and also the temperature-tan $\delta$ distribution curve drawn up by a dynamic measuring method has a single peak and is very broad. It should be noted that compositions formed by simply blending said respective blocks (A), (B), etc., are not rendered compatible to such a degree as to give a single glass transition point, so that such compositions are unsatisfactory, particularly in their fracture characteristics, and it is impossible to develop the physical properties of the above block copolymers.

The vinyl content in the respective blocks of the block copolymer of this invention is within the range of 40 to 75%, preferably 40 to 70%, in the copolymer block (A) and more than 20% but not more than 50%, preferably 25 to 50%, in the polymer block (B). When at least one of the blocks (A) and (B) has a vinyl content distribution breadth of at least 20% the fracture characteristics can be improved without impairing the balance of other characteristics.

The term "vinyl content distribution breadth" is used herein to signify a change of vinyl content along one molecular chain. For example, when styrene and butadiene are copolymerized with a catalyst consisting of a combination of an organolithium compound and a Lewis base (such as an ether or an amine) as shown in, for example, JP—A 149,413/81, the vinyl content can be varied by providing a difference between the temperature at the time of initiation of polymerization and that at the time of completion thereof.

If the vinyl content in the copolymer block (A) is more than 75%, the fracture characteristics become inferior, and if said content is less than 40% difficulties arise in providing a good balance between wet skid resistance and rolling resistance. Also, if the vinyl content in the polymer block (B) is more than 50%, low rolling resistance results, and if said vinyl content is not more than 20%, we have been unable to achieve a good balance between wet skid resistance and rolling resistance.

The bound styrene content in the respective blocks of the block copolymer is required to be 20 to 50% by weight, preferably 20 to 40% by weight, in the copolymer block (A) and not more than 10% by weight in the polymer block (B). If the bound styrene content in the copolymer block (A) is less than 20% by weight, we have been unable to provide satisfactory wet skid resistance and satisfactory fracture characteristics, while, if said content exceeds 50% by weight, the rolling resistance deteriorates excessively. Also, if the bound styrene content in the block (B) exceeds 10% by weight, the rolling resistance of the block copolymer becomes unsatisfactory.

The weight ratio of the copolymer block (A) to the polymer block (B) is generally within the range of from 1:9 to 9:1, preferably 1:5 to 5:1. Even when the block copolymer is composed of more than two blocks, such as (A)—(B)—(A) or (B)—(A)—(B), excellent properties can be obtained if this total weight also is satisfied.

In block copolymers of this invention, the total vinyl content of the whole bound butadiene should be 30 to 70%, and the total styrene content should be within the range of 10 to 40% by weight. If said contents are outside the above-defined ranges, it becomes impossible to secure the required balance among the fracture characteristics, the rolling resistance, the wear characteristics and the wet skid resistance.

Coupling of said block copolymers with a metallic halide results in an improvement in such characteristics as processability and fracture characteristics and such an improvement is most noticeable when the coupling efficiency is more than 20%.

For producing a styrene-butadiene block copolymer according to this invention, first a copolymer or homopolymer block (A) or (B) is formed by polymerization and then the other block or blocks are formed by polymerization. The vinyl content in the copolymer blocks can be varied by changing the amount of the microstructure controlling agent or by changing the mean polymerization temperature without changing the amount of said microstructure controlling agent in the course of the polymerization of the respective copolymer blocks. Also, the bound styrene content can be changed by adjusting the styrene-butadiene monomer feed.

An organolithium compound may be used as polymerization initiator in the polymerization. Various types of ethers and amines may be used as the controlling agent for the vinyl content in the butadiene portion, and various types of ethers, amines and anionic surface active agents having a —$SO_3M$ or —$OSO_3M$ group (M representing Na, K, Rb or Cs) may be used as the randomizing agent for styrene.

Examples of organolithium compounds usable as polymerization initiator in this invention are methyllithium, ethyllithium, n-butyllithium, sec-butyllithium, tert-butyllithium, phenyllithium, tetramethylenedilithium, pentamethylenedilithium and decamethylenedilithium.

As the microstructure controlling agent, there may be used ether compounds and tertiary amines alone or in combination. Examples of such ether compounds and tertiary amines are diethyl ether or thioether, amyl ethyl ether, octyl ethyl ether, tetrahydrofuran, dioxane, ethylene glycol dimethyl ether, diethylene glycol dimethyl ether, triethylene glycol dimethyl ether, triethylamine, N,N,N',N'-tetramethylethylenediamine, triethylenediamine and N-methylmorpholine. These compounds can also serve as a styrene randomizing agent.

As well as said ethers and amines, there may be also used as randomizing agent an anionic surface active agent having an —$SO_3M$ or —$OSO_3M$ group (M representing Na, K, Rb or Cs). Examples of such surfactants are alkylaryl-sulphonates, amide-bonded sulphonates, ester-bonded sulphonates and ester-bonded sulphuric ester salts such as are disclosed in JP—B 44315/79. Benzene, toluene, xylene, cyclohexane, hexane and heptane may be used as polymerization solvent.

The polymerization temperature is important for deciding the vinyl content in the butadiene portion. When the polymerization uses an organolithium compound and an ether or an amine, the vinyl content is influenced by the polymerization temperature; thus a low polymerization temperature leads to a high vinyl content and a high polymerization temperature leads to a low vinyl content. Usually the polymerization is carried out at a temperature within the range of 0° to 150°C. It is desirable to allow a sufficient range of polymerization temperature to provide the required vinyl content distribution breadth in the blocks.

Metallic halides are used as the coupling agent for the coupling reaction. Preferred examples of such metallic halides are the compounds represented by the following formulae (1), (2) and (3):

(1) $$R_nMX_{4-n}$$

(2) $$M'X_2$$

(3) $$X_3M\text{—}R'\text{—}MX_3 \quad \text{or} \quad X_2RM\text{—}R'\text{—}MRX_2$$

wherein M is Si, Ge, Sn or Pb; M' is Sn or Pb; X is chlorine, bromine or iodine; R is an alkyl, allyl or aryl group; R' is an alkylene or aryl group; and n is 0, 1 or 2. Examples of such compounds are silicon tetrachloride, silicon tetrabromide, germanium tetrachloride, germanium tetrabromide, tin tetrachloride, tin dichloride, lead dichloride and dimethyldicyclosilane.

The mode of bonding between the block copolymer and the metal of the coupling agent is preferably such that a butadienyl-metal bond is formed. Also, in the block copolymers of this invention, it is desirable that the molecule terminal of the polymer having metal-carbon bonds in the molecular chain is a copolymer block with a low styrene content because such a structure provides a copolymer with better characteristics such as lower rolling resistance.

The styrene-butadiene block copolymers of this invention have markedly improved wet skid resistance, rolling resistance, fracture and wear characteristics as well as processability and cold flow characteristics, compared with conventional SBR (obtained by using chiefly an organolithium compound as polymerization initiator), and thus they can serve as an excellent copolymer rubber.

By utilizing said characteristics, the block copolymers of this invention can be used, either alone or in blends with other rubbers, for the fabrication of tyres and other industrial products.

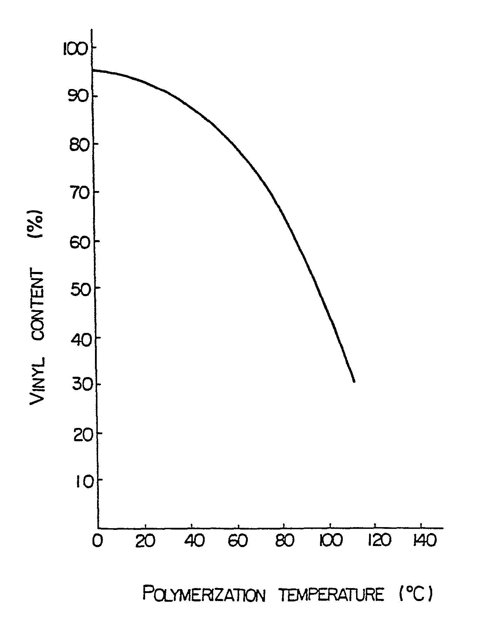

The present invention is further described below with reference to the Examples and the accompanying drawing.

The drawing is a graph showing the relation between polymerization temperature and microstructure in the polymerization of the copolymer blocks (A) in Example 1.

In the Examples, the wet skid resistance measured by a skid tester was adopted as an index of wet skid resistance of the products, and the impact resilience at 70°C and heat build-up temperature as measured by a Goodrich flexometer were used as an index of rolling resistance.

Examples 1—8 and Comparative Examples 1—8

A 5 litre reactor was charged with 2,000 g of a cyclohexane/n-hexane (90/10 by weight) mixture and with predetermined quantities of butadiene, tetrahydrofuran, potassium dodecylbenzenesulphonate and, if necessary, styrene in a nitrogen atmosphere, and the mixture was subjected to isothermic of adiabatic polymerization under the polymerization conditions of the blocks (B) with a vinyl content as shown in Table 1, using n-butyllithium as polymerization initiator. In Comparative Examples 1 and 4, the polymerization was started with the block (A), and, in the others, the polymerization was started with the block (B). Comparative Examples 6, 7 and 8 were random SBR's which were not subjected to the subsequent block polymerization.

After the polymerization conversion had reached 95 to 100%, further predetermined quantities of butadiene, styrene, tetrahydrofuran, diethylene glycol dimethyl ether and potassium dodecylbenzenesulphonate were supplied and the mixture was subjected to the remaining block (A) polymerization under the prescribed polymerization conditions. After completion of the polymerization, 2,6-di-tert-butyl-p-cresol was added in an amount of 0.7 part by weight to 100 parts by weight of the polymer, and, after removing the solvent by steam stripping, the residue was dried on 100°C rolls to obtain a polymer. The properties of the polymers thus obtained are shown in Table 2.

The microstructure of the butadiene portion of the polymer was observed according to D. Morero's method, and the styrene content in the copolymer was determined from the calibration curve using the absorbance at 699 cm$^{-1}$.

The accompanying drawing shows the relation between polymerization temperature and microstructure under the polymerization conditions of the copolymer blocks (A) in Example 1.

In the adiabatic polymerization of the copolymer blocks (B) at a polymerization temperature within the range of 50° to 90°C, there was achieved a vinyl content distribution breadth of approximately 20%.

The polymers were mixed and compounded by an internal mixer and rolls according to the recipe shown in Table 3 and then vulcanized at 145°C for 30 minutes. The properties of the resulting vulcanizates are shown in Table 4.

The Comparative Example 7/Comparative Example 8 blend is a simple 50/50 blend of the copolymers of Comparative Examples 7 and 8.

It will be seen that the block copolymers of Examples 1—8 according to this invention have better processability (roll retention) than the random SBR of Comparative Example 6, which has the same levels of vinyl content and bound styrene content. The copolymer of Example 1 is superior to that of Comparative Example 6 in its wet skid resistance, wear characteristics and heat built-up. The copolymer of Example 3 is inferior to that of Example 1 in its fracture characteristics because the former has no specific vinyl content distribution breadth.

The copolymer of Comparative Example 1 is relatively well-balanced among such factors as wet skid resistance, impact resilience and wear resistance, but their values are still unsatisfactory in comparison with those of Example 1. The copolymers of Comparative Examples 2—5 are inferior to those of Examples 1—8 in their balance of said factors.

Simple blends of blocks A and blocks B of this invention are poor in processability, wet skid resistance, wear resistance, impact resilience and fracture characteristics.

Examples 9—18 and Comparative Example 9

The samples of Table 5 (Examples 9—18) were obtained according to the polymerization recipe of Table 6. First the polymerization was carried out under the block (B) polymerization conditions using cyclohexane as solvent and n-butyllithium as polymerization initiator, and, after the polymerization conversion had reached 95—100%, further predetermined quantities of a monomer and an ether were supplied, followed by additional polymerization under the polymer block (A) polymerization conditions. After completion of the polymerization, a predetermined amount of a coupling agent was added.

Both the styrene content and the vinyl content of the polymer were measured by an infrared spectrophotometer. The proportion of metal-carbon bond chains (coupling efficiency) was determined from the ratio of the high molecular weight side component measured by gel permeation chromatography (GPC).

By using the samples of Table 5, various compounds were prepared according to the compounding recipe shown in Table 3 and these were vulcanized at 145°C for 30 minutes. The properties of the obtained vulcanizates are shown in Table 7.

The products of Examples 9—17 showed excellent and well balanced tensile strength, Dunlop impact resilience, Goodrich heat build-up, wet skid resistance and Lambourn wear characteristics and also showed good processability.

The sample of Comparative Example 9, prepared by coupling the random SBR with SnCl$_4$, was inferior to those of Examples 9—17 in wet skid resistance and tensile strength. Also, the products of Examples 9—17 were superior in tensile strength, etc., to the block polymer containing no metal-carbon bond chain (Example 18).

TABLE 1

| | n-BuLi[*1] (g) | Block (A) polymerization conditions | | | | Block (B) polymerization conditions | | | (A)/(B) (wt. ratio) | Remarks |
|---|---|---|---|---|---|---|---|---|---|---|
| | | Butadiene/styrene (g) | Tetrahydrofuran (g) | Potassium dodecylbenzenesulphonate (g) | Polymerization temperature (°C) | Butadiene/styrene (g) | Tetrahydrofuran (g) | Polymerization temperature (°C) | | |
| Example 1 | 0.28 | 215/115 | 25 | — | 50—92 | 170/0 | 1.25 | 50 | 2/1 | |
| 2 | 0.26 | " | " | — | 50—90 | " | 2.5 | " | " | |
| 3 | 0.27 | " | 7.5 | — | 50 | " | 1.25 | " | " | |
| 4 | 0.29 | " | 25 | — | 50—91 | 161/9 | " | " | " | |
| 5 | 0.27 | " | " | — | 30—72 | 170/0 | " | " | " | |
| 6 | 0.25 | 230/100 | " | — | 20—60 | " | " | " | " | |
| 7 | 0.25 | 160/90 | 15 | — | 50—80 | 250/0 | " | " | 1/1 | |
| 8 | 0.27 | 260/140 | 40 | — | 50—105 | 100/0 | " | " | 1/1 | |
| Comparative Example 1 | 0.31 | 230/100 | — | 0.18 | 60 | 170/0 | 15 | 60 | 2/1 | |
| 2 | 0.29 | " | Diglyme[*2] 1.95 | — | 50 | " | 1.25 | 50 | " | |
| 3 | 0.28 | 130/200 | 25 | — | 50 | " | " | " | " | |
| 4 | 0.26 | 215/115 | " | — | 50—90 | " | 25 | 30 | " | |
| 5 | 0.27 | " | " | — | 50—91 | 136/34 | 1.25 | 50 | " | |
| 6 | 0.27 | 380/120 | 7.5 | — | 50 | — | — | — | — | Uniform polymer |
| 7 | 0.26 | 325/175 | 10 | — | 50 | — | — | — | — | " |
| 8 | 0.25 | 500/0 | 2.5 | — | 70 | — | — | — | — | " |

Note:

Solvent: cyclohexane/n-hexane (90/10 by weight), 2,000 g

[*1]: n-BuLi-=normal butyllithium

[*2]: Diglyme=diethylene glycol dimethyl ether

TABLE 2

| | Block (A) | | | Block (B) | | | Whole polymer | | | | |
|---|---|---|---|---|---|---|---|---|---|---|---|
| | Vinyl content in butadiene portion (%) | Bound styrene (%) | Presence or absence of vinyl content distribution breadth | Vinyl content in butadiene portion (%) | Bound styrene (%) | Presence or absence of vinyl content distribution breadth | Vinyl content in butadiene portion (%) | Bound styrene (%) | $ML_{1+4}^{100°C}$ | (A)/(B) (wt. ratio) | Remarks |
| Example 1 | 49 | 35 | Present | 29 | 0 | Absent | 40 | 23 | 51 | 2/1 | |
| 2 | 50 | 34 | " | 40 | 0 | " | 45 | 22 | 50 | " | |
| 3 | 51 | 36 | Absent | 30 | 0 | " | 41 | 23 | 48 | " | |
| 4 | 50 | 35 | Present | 29 | 5 | " | 41 | 23 | 47 | " | |
| 5 | 58 | 35 | " | 31 | 0 | " | 46 | 23 | 52 | " | |
| 6 | 65 | 30 | " | 28 | 0 | " | 50 | 20 | 53 | " | |
| 7 | 44 | 35 | " | 29 | 0 | " | 35 | 18 | 51 | 1/1 | |
| 8 | 50 | 35 | " | 30 | 0 | " | 44 | 28 | 53 | 4/1 | |
| Comparative Example 1 | 15 | 30 | Absent | 60 | 0 | " | 34 | 20 | 50 | 2/1 | |
| 2 | 80 | 30 | " | 30 | 0 | " | 59 | 20 | 48 | " | |
| 3 | 50 | 60 | " | 30 | 0 | " | 39 | 40 | 47 | " | |
| 4 | 50 | 35 | Present | 70 | 0 | " | 57 | 23 | 51 | " | |
| 5 | 50 | 34 | " | 30 | 20 | " | 42 | 30 | 50 | " | |
| 6 | 41 | 22 | Absent | — | — | " | 40 | 22 | 49 | — | Uniform polymer |
| 7 | 51 | 35 | " | — | — | " | 51 | 35 | 51 | — | " |
| 8 | 30 | 0 | " | — | — | " | 30 | 0 | 48 | — | " |

0 134 909

### TABLE 3

| | Parts by weight |
|---|---|
| Styrene-butadiene block copolymer | 100 |
| Carbon black (ISAF) | 50 |
| Aromatic process oil*3 | 10 |
| Zinc oxide | 4 |
| Stearic acid | 2 |
| Accelerator MSA*1 | 0.54 |
| DM*2 | 0.86 |
| Sulphur | 2.0 |

Note:

*1: N-oxydiethylene-2-benzothiazylsulphenamide produced by Ouchi Shinko Kagaku Kogyo Co., Ltd., Japan)

*2: Dibenzothiazyl disulfide (produced by Ouchi Shinko Kagaku Kogyo Co., Ltd., Japan)

*3: High aromatic process oil (produced by Japan Synthetic Rubber Co., Ltd.)

TABLE 4

| | 1) 300% modulus (kg · f/cm²) | Tensile strength (kg · f/cm²) | Elongation (%) | Hardness (JIS-A) | 2) Dunlop resilience at 70°C (%) | 3) Heat-build up tempera- ture ΔT (°C) | 4) Wet skid (Index) | 5) Lambourn wear (Index) | 6) Roll reten- tion of compounded rubber |
|---|---|---|---|---|---|---|---|---|---|
| Example | | | | | | | | | |
| 1 | 155 | 223 | 430 | 68 | 71 | 18.5 | 115 | 110 | Good |
| 2 | 157 | 220 | 400 | 68 | 69 | 19.0 | 115 | 115 | " |
| 3 | 150 | 216 | 420 | 67 | 70 | 19.0 | 110 | 105 | " |
| 4 | 147 | 227 | 410 | 69 | 70 | 19.5 | 120 | 120 | " |
| 5 | 148 | 219 | 410 | 69 | 69 | 19.5 | 125 | 110 | " |
| 6 | 152 | 220 | 420 | 68 | 69 | 19.5 | 120 | 110 | " |
| 7 | 149 | 223 | 420 | 69 | 72 | 18.0 | 110 | 110 | " |
| 8 | 155 | 231 | 430 | 69 | 67 | 20.5 | 125 | 125 | " |
| Comparative Example | | | | | | | | | |
| 1 | 147 | 217 | 400 | 69 | 68 | 20.5 | 105 | 105 | " |
| 2 | 161 | 195 | 370 | 72 | 64 | 23 | 130 | 90 | Fair |
| 3 | 149 | 210 | 380 | 72 | 62 | 25 | 140 | 95 | Good |
| 4 | 160 | 215 | 390 | 70 | 66 | 22 | 125 | 100 | " |
| 5 | 148 | 235 | 420 | 69 | 66 | 22 | 120 | 115 | " |
| 6 | 151 | 223 | 410 | 68 | 68 | 20 | 100 | 100 | Fair-bad |
| Comp. Ex. 7/ Comp. Ex. 8 blend | 145 | 210 | 390 | 67 | 67 | 21 | 100 | 95 | Fair-bad |

Note:
1) Measured according to JIS-K-6301.
2) Measured according to B.S-903 Part 22 method.
3) Goodrich heat build-up, measured according to ASTM D-623/58 (Method A).
4) Measured on the indoor wet asphalt road surface at 25°C by using a skid tester made by Stanley Inc., of Britain. The value of Comparative Example 6 was expressed as 100 by way of a reference index. The greater the figure, the better.
5) Measured by Lambourn wear tester at a slip rate of 30% and at 25°C. The value of Comparative Example 6 was expressed as 100 by way of a reference index. The greater the figure, the better.
6) Roll retention of the compound mixed by an internal mixer was expressed by four-grade rating (Excellent, Good, Fair, and Bad).

TABLE 5

| | Block (B) | | Block (A) | | Whole polymer | | Coupling efficiency (%) | Mooney viscosity ($ML_{1+4}^{100°C}$) | (B)/(A) (wt. ratio) | Coupling agent used |
|---|---|---|---|---|---|---|---|---|---|---|
| | Vinyl content in butadiene portion (%) | Bound styrene (%) | Vinyl content in butadiene portion (%) | Bound styrene (%) | Vinyl content in butadiene portion (%) | Bound styrene (%) | | | | |
| Example 9 | 12 | 0 | 62 | 35 | 40 | 23 | 49 | 60 | 1/2 | $SnCl_4$ |
| 10 | 30 | 0 | 51 | 35 | 42 | 23 | ·52 | 61 | " | " |
| 11 | 30 | 5 | 50 | 30 | 42 | 22 | 50 | 63 | " | " |
| 12 | 31 | 0 | 49 | 35 | 41 | 23 | 55 | 60 | " | $SiCl_4$ |
| 13 | 30 | 0 | 50 | 35 | 41 | 23 | 48 | 63 | " | $GeCl_4$ |
| 14 | 31 | 0 | 50 | 35 | 38 | 18 | 47 | 58 | 1/1 | $SnCl_4$ |
| 15 | 51 | 0 | 29 | 35 | 39 | 23 | 50 | 55 | 1/2 | " |
| 16 | 50 | 0 | 41 | 35 | 45 | 23 | 48 | 57 | " | " |
| 17 | 50 | 0 | 42 | 35 | 45 | 23 | 54 | 62 | " | " |
| 18 | 30 | 0 | 50 | 35 | 41 | 23 | — | 60 | 1/2 | — |
| Comparative Example 9 | 45 | 25 | — | — | 45 | 25 | 48 | 58 | — | " |

0 134 909

TABLE 6

| | n-Butyl lithium (g) | Block (B) polymerization conditions | | | | Block (A) polymerization conditions | | | Coupling agent and its amount added | | (B)/(A) (wt. ratio) |
|---|---|---|---|---|---|---|---|---|---|---|---|
| | | Butadiene/ styrene (g) | Tetra-hydro-furan (g) | Polymeri-zation tempera-ture (°C) | | Butadiene/ styrene (g) | Tetra-hydro-furan (g) | Polymeri-zation tempera-ture (°C) | Kind | (g) | |
| Example 9 | 0.36 | 167/0 | — | 50 | | 216/117 | 17.5 | 40 | SnCl$_4$ | 0.22 | 1/2 |
| 10 | 0.35 | 167/0 | 1.0 | 40 | | " | " | 40—82 | " | 0.21 | " |
| 11 | 0.34 | 159/8 | 1.1 | " | | 233/100 | " | 40—84 | " | 0.21 | " |
| 12 | 0.35 | 167/0 | 1.0 | " | | 216/117 | " | 40—83 | SiCl$_4$ | 0.14 | " |
| 13 | 0.37 | 167/0 | " | " | | " | " | 40—82 | GeCl$_4$ | 0.19 | " |
| 14 | 0.34 | 250/0 | 1.0 | 40 | | 162/88 | 15.0 | 40—72 | SnCl$_4$ | 0.21 | 1/1 |
| 15 | 0.33 | 167/0 | 4.5 | 40 | | 216/117 | 4.5 | 50—93 | " | 0.20 | 1/2 |
| 16 | 0.38 | 167/0 | " | " | | " | 4.5 | 50 | " | 0.23 | " |
| 17 | 0.37 | 167/0 | 4.5 | 40 | | " | 4.5 | 50 | " | 0.23 | " |
| 18 | 0.27 | 167/0 | 1.0 | 40 | | 216/117 | 17.5 | 40—79 | — | — | 1/2 |
| Comparative Example 9 | 0.31 | 375/125 | 5.0 | 50 | | — | — | — | " | 0.19 | " |

Note: Solvent: cyclohexane, 2,000 g.

0 134 909

TABLE 7

| | 1) 300% modulus (kg · f/cm²) | 1) Tensile strength (kg · f/cm² | 1) Elongation (%) | 1) Hardness (JIS-A) | 2) Dunlop impact resilience at 70°C (%) | 3) Heat-build-up temperature $\Delta T$ (°C) | 4) Wet skid (index) | 5) Lambourn wear (index) | 6) Roll retention of compounded rubber |
|---|---|---|---|---|---|---|---|---|---|
| Example 9 | 165 | 255 | 420 | 66 | 72 | 17 | 110 | 120 | Excellent |
| 10 | 170 | 260 | 410 | 65 | 71 | 18 | 115 | 120 | " |
| 11 | 172 | 268 | 400 | 65 | 72 | 18 | 110 | 125 | " |
| 12 | 175 | 250 | 430 | 64 | 71 | 19 | 110 | 125 | " |
| 13 | 169 | 248 | 410 | 65 | 71 | 19 | 110 | 115 | " |
| 14 | 173 | 255 | 400 | 66 | 73 | 18 | 105 | 115 | " |
| 15 | 168 | 261 | 420 | 65 | 72 | 19 | 110 | 120 | " |
| 16 | 165 | 264 | 400 | 66 | 71 | 18 | 120 | 120 | " |
| 17 | 173 | 257 | 420 | 65 | 72 | 18 | 120 | 115 | " |
| 18 | 159 | 227 | 410 | 68 | 70 | 19 | 100 | 100 | Good |
| Comparative Example 9 | 160 | 248 | 390 | 65 | 71 | 19 | 95 | 105 | Fair |

Note:
1) Measured according to JIS K-6301.
2) Measured according to B.S. 903 Part 22 Method.
3) Goodrich heat build-up, measured according to ASTM D-623/58 (Method A).
4) Measured on the indoor wet asphalt road surface at 25°C by using a skid tester made by Stanley Inc., of Britain. The value of Example 18 was expressed as 100 for a reference index. The greater the figure, the better.
5) Measured by Lambourn wear tester at a slip rate of 30% and at 25°C. The value of Example 18 was expressed as 100 for a reference index. The greater the figure, the better.
6) Roll retention of the compounded rubber mixed by an internal mixer was expressed by four-grade rating (Excellent, Good, Fair, and Bad).

## 0 134 909

**Claims**

1. A styrene-butadiene block copolymer having a Mooney viscosity ($ML_{1+4}$, 100°C) of from 10 to 150, a total vinyl content in the whole of the bound butadiene of from 30 to 70% and a total bound styrene content of from 10 to 40% by weight, said block copolymer comprising a combination of (A) at least one styrene-butadiene random copolymer block having a bound styrene content of from 20 to 50% by weight and a vinyl content of from 40 to 75% in the butadiene portion, and (B) at least one polymer block having a bound styrene content of from 0 to 10% by weight and a vinyl content of more than 20% but not more than 50% in the butadiene portion, block (A) comprising from 10 to 90% by weight of the copolymer.

2. A copolymer according to Claim 1, in which the vinyl content of said block (A) is from 40 to 70% and of said block (B) is from 25 to 50%, and in which the bound styrene content of said block (A) is from 20 to 40% by weight and of said block (B) is not more than 10% by weight.

3. A copolymer according to Claim 1 or Claim 2, in which at least one of said blocks has a vinyl content distribution breadth of at least 20%.

4. A copolymer according to any one of Claims 1 to 3, in which the molecules of the block copolymer are coupled with a coupling agent at a coupling efficiency of at least 20%.

5. A copolymer according to Claim 4, in which the coupling agent is a halide of silicon, germanium, tin or lead.

**Patentansprüche**

1. Styrol-Butadien-Blockcopolymer mit einer Mooney-Viskosität ($ML_{1+4}$, 100°C) von 10 bis 150, einem Gesamtvinylgehalt im gebundenen Gesamtbutadien von 30 bis 70% und einem Gesamtgehalt des gebundenen Styrols von 10 bis 40 Gew.-%, enthaltend eine Kombination von

(A) mindestens einem statischen Styrol-Butadien-Copolymerblock mit einem Gehalt an gebundenem Styrol von 20 bis 50 Gew.-% und einem Vinylgehalt von 40 bis 75% im Butadienanteil und

(B) mindestens einem Polymerblock mit einem Gehalt an gebundenem Styrol von 0 bis 10 Gew.-% und einem Vinylgehalt von über 20%, jedoch nicht über 50% im Butadienanteil,

wobei der Block (A) von 10 bis 90 Gew.-% des Copolymers ausmacht.

2. Copolymer nach Anspruch 1, in dem der Vinylgehalt des Blocks (A) von 40 bis 70% und des Blocks (B) von 25 bis 50% ausmacht und der Gehalt an gebundenem Styrol des Blocks (A) von 20 bis 40 Gew.-% und des Blocks (B) nicht über 10 Gew.-% beträgt.

3. Copolymer nach Anspruch 1 oder 2, in dem mindestens einer der Blöcke eine Verteilungsbreite des Vinylgehalts von mindestens 20% hat.

4. Copolymer nach einem der Ansprüche 1 bis 3, in dem die Moleküle des Blockcopolymers mit einem Kupplungsmittel bei einem Kupplungswirkungsgrad von mindestens 20% gekuppelt sind.

5. Copolymer nach Anspruch 4, in dem das Kupplungsmittel ein Silizium-, Germanium-, Zinn- oder Bleihalogenid ist.

**Revendications**

1. Copolymère bloc ayant une viscosité Mooney ($ML_{1+4}$, 100°C) de 10 à 150, une teneur totale en vinyle dans l'ensemble du butadiène lié de 30 à 70% et une teneur totale en styrène lié de 10 à 40% en poids, ledit copolymère comprenant une combinaison de (A) au moins un bloc copolymère statistique styrène-butadiène ayant une teneur en styrène lié de 20 à 50% en poids et une teneur en vinyle de 40 à 75% dans la partie butadiène, et (B) au moins en bloc polymère ayant une teneur en styrène lié de 0 à 10% en poids et une teneur en vinyle de plus de 20% mais pas plus que 50% dans la partie butadiène, le bloc (A) constituant de 10 à 90% en poids du copolymère.

2. Copolymère selon la revendication 1, dans lequel la teneur en vinyle du bloc (A) est de 40 à 70% et celle du bloc (B) est de 25 à 50%, et dans lequel la teneur en styrène lié du bloc (A) est de 20 à 40% en poids et celle du bloc (B) n'est pas plus que 10% en poids.

3. Copolymère selon la revendication 1 ou 2, dans lequel au moins l'un des blocs a une largeur de distribution de la teneur en vinyle d'au moins 20%.

4. Copolymère selon l'une des revendications 1 à 3, dans lequel les molécules du copolymère bloc sont liées à un agent de pontage avec une efficacité de pontage d'au moins 20%.

5. Copolymère selon la revendication 4, dans lequel l'agent de pontage est un halogénure de silicium, de germanium, d'étain ou de plomb.

POLYMERIZATION TEMPERATURE (°C)